(19) Europäisches Patentamt
European Patent Office
Office européen des brevets

(11) **EP 1 841 266 A2**

(12) **EUROPEAN PATENT APPLICATION**

(43) Date of publication:
**03.10.2007 Bulletin 2007/40**

(51) Int Cl.:
*H04Q 7/38* (2006.01)   *H04Q 7/36* (2006.01)

(21) Application number: **07006876.2**

(22) Date of filing: **02.04.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **31.03.2006 KR 20060029746**

(71) Applicant: **Samsung Electronics Co., Ltd.**
**Suwon-si**
**443-742 Gyeonggi-do (KR)**

(72) Inventors:
 • **Park, Dae-Young**
 **Yeongtong-gu**
 **Suwon-si**
 **Gyeonggi-do 443-742 (KR)**
 • **Hyon, Tae-In**
 **Yeongtong-gu**
 **Suwon-si**
 **Gyeonggi-do 443-742 (KR)**

 • **Yun, Sang-Boh**
 **Yeongtong-gu**
 **Suwon-si**
 **Gyeonggi-do 443-742 (KR)**
 • **Chung, Hee-Jeong**
 **Yeongtong-gu**
 **Suwon-si**
 **Gyeonggi-do 443-742 (KR)**
 • **Kim, Nak-Myeong**
 **Yeongtong-gu**
 **Suwon-si**
 **Gyeonggi-do 443-742 (KR)**

(74) Representative: **Grünecker, Kinkeldey,**
**Stockmair & Schwanhäusser**
**Anwaltssozietät**
**Maximilianstrasse 58**
**80538 München (DE)**

(54) **Method and system for allocating resources in a communication system**

(57)    A method and system for allocating resources to prevent inter-cell interference in a multi-cellular communication system, in which an interference period is detected by comparing a data transmission period in a first cell with a data transmission period in a second cell, the interference period is divided into a plurality of unit periods, each of the first cell and the second cell is divided into a plurality of unit areas corresponding to the unit periods, and resources of the unit periods corresponding to the unit areas are allocated to the unit areas.

FIG.2

**Description**

**BACKGROUND OF THE INVENTION**

1. Field of the Invention

The present invention generally relates to a communication system. More particularly, the present invention relates to a method and system for allocating resources to prevent inter-cell interference in a communication system having a multi-cell structure.

2. Description of the Related Art

The most fundamental issue to communications is how efficiently and how reliably data can be sent on a channel. Along with the demand for a high-speed communication system that can process and transmit various types of information, such as video and wireless data, beyond traditional voice service, increasing system efficiency by an appropriate coding scheme is critical to a future-generation multimedia communication system undergoing active research. Such a future-generation wireless communication system aims to simultaneously support multimedia services with different traffic characteristics, such as broadcasting and real-time video conferences, as well as voice service. For efficient provisioning of such services, duplexing is required, which takes into account the asymmetry and continuity of uplink and downlink transmission according to service characteristics.

In a communication system, limited resources including frequencies, codes, and time slots are shared among a plurality of cells. Therefore, inter-cell interference occurs among the cells, particularly between adjacent cells. Adjacent Cell Interference (ACI) is severe in a communication system using a frequency reuse factor of 1. When the frequency reuse factor is 1, frequency resources can be efficiently utilized, but ACI becomes severe. In particular, a Mobile Station (MS) at a cell boundary suffers from a steep decrease in a Carrier-to-Interference and Noise Ratio (CINR) of a signal from a Base Station (BS) managing the cell in which the MS is located. That is, while an MS near to a serving BS experiences interference too small to affect communications between the MS and the serving BS, an MS at the cell boundary receives interference from a BS managing a neighbor cell (neighbor BS), thereby decreasing system performance.

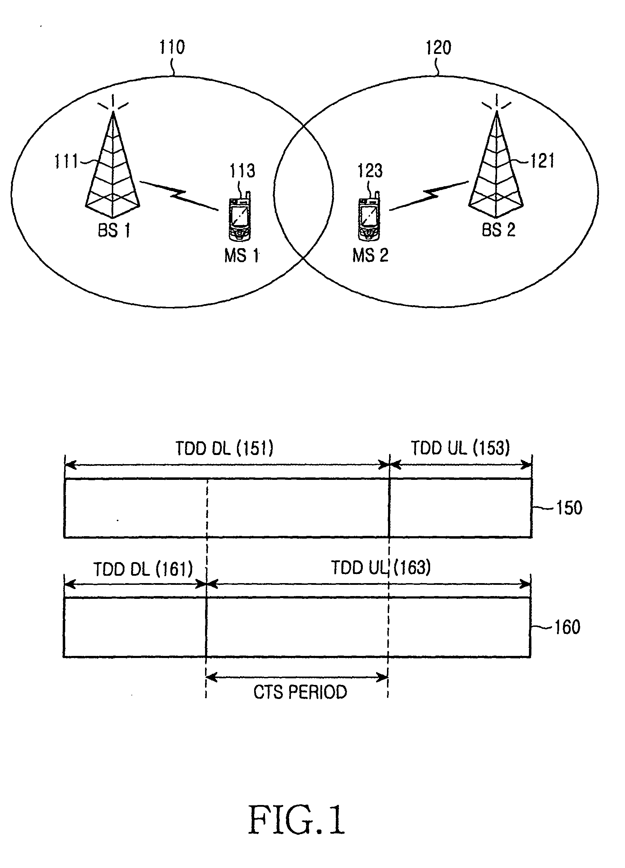

To avoid the ACI, the MS improves a reception CINR from the serving BS by use of an interference canceller for DownLink (DL) reception and the BS improves a reception CINR from the MS by use of an interference canceller for UpLink (UL) reception. However, the use of the interference canceller is not effective in precise interference cancellation or accurate recovery of a signal received from the serving BS. As a consequence, the increase of system performance cannot be expected. Now a description will be made of a communication system having a multi-cell structure with reference to FIG 1.

FIG 1 shows a typical multi-cellular communication system that is configured in a multi-cell structure. Referring to FIG 1,the communication system includes a cell 1 110 and a cell 2120, a BS 1 111 and a BS 2 121 that manage cell 1 110 and cell 2 120, respectively, an MS 1 113 for receiving a communication service from BS 1 111 within the coverage area of cell 1 110, and an MS 2 123 for receiving a communication service from BS 2 121 within the coverage area of cell 2 120. MS 1 113 and MS 2 123 both have mobility and fixedness. For better understanding of the description, they are assumed to be at the boundaries of cell 1 and cell 2 and bi-directional communications are conducted in a duplexing scheme, such as Time Division Duplexing (TDD) and Frequency Division Duplexing (FDD), particularly in TDD in the communication system.

Since BS 1 111 and BS 2 121 operate in TDD, a frame 150 for cell 1 110 is divided into a TDD DL area 151 and a TDD UL area 153 and a frame 160 for cell 2 120 is divided into a TDD DL area 161 and a TDD UL area 163. BS 1 111 and BS 2 121 managing cell 1 110 and cell 2 120, respectively, allocate resources to MS 1 113 and MS 2 123 according to the communication environments of MS 1 113 and MS 2 123. In other words, the TDD DL areas 151 and 161 and the TDD UL areas 153 and 163 of the frames 150 and 160 are determined according to the resources allocated according to the communication environments.

A Cross Time Slot (CTS) period exists between the frame 150 and the frame 160, that is, between the TDD DL area 151 and the TDD UL area 163. The CTS period causes interference between MS 1 113 and MS 2 123. TDD UL traffic between MS 2 123 and BS 2 121 in cell 2 120 causes Co-Channel Interference (CCI) to TDD DL traffic between MS 1 113 and BS 1 111 in cell 1 110, and vice versa.

When MS 2 123 and BS 2 121 exchange data with each other using allocated resources as in the frame 160 while MS 1 113 and BS 1 111 exchange data with each other using allocated resources as in the frame 150, the existence of the CTS period decreases the reception CINRs of MS 1 113 and MS 2 123 at the cell boundaries, thereby decreasing reception performance.

To avert the problem of a CINR decrease caused by the inter-cell interference, MS 1 113 and MS 2 123 cancel interference by use of interference cancellers, as described before. However, because BS 1 111 and BS 2 121 allocate resources independently, it may occur that the interference cancellers do not accurately cancel interference or do not accurately recover signals received from the serving BSs, i.e. BS 1 111 and BS 2 121. Therefore, system performance cannot be improved.

For example, when MS 2 123 transmits and receives data to and from BS 2 in cell 2 120 in the TDD DL area 161 and the TDD UL area 163 of the frame 160, while MS 1 113 transmits and receives data to and from BS 1 111 in the TDD DL area 151 and the TDD UL area 153 of the frame 150, MS 1 113 must get knowledge of the CTS period between the TDD DL area 151 and the TD UL area 163 to cancel the interference that data transmitted from BS 2 121 causes. Also, MS 1 113 must know the Modulation and Coding Scheme (MCS) level of data transmitted in the TDD UL area 163 and channel information of cell 2 120.

That is, for canceling interference from cell 2 120, MS 1 113 must estimate the channel of cell 2 120 using MAP information and a pilot signal received from BS 2 121, Acquisition of the information imposes a big load to MS 1 113, resulting in degradation of system performance. If a plurality of cells are neighboring to MS 1 113, the system performance degradation becomes more serious.

## SUMMARY OF THE INVENTION

The present invention addresses at least the problems and/or disadvantages described above and provides at least the advantages described below. Accordingly, an aspect of the present invention is to provide a method and apparatus for allocating resources in a communication system.

Another aspect of the present invention is to provide a method and apparatus for allocating resources to prevent inter-cell interference in a multi-cellular communication system.

In accordance with an aspect of the present invention, a method is provided for allocating resources in a communication system. The method includes detecting an interference period by comparing a data transmission period in a first cell with a data transmission period in a second cell; dividing the interference period into a plurality of unit periods; dividing each of the first cell and the second cell into a plurality of unit areas corresponding to the unit periods; and allocating to the unit areas resources of the unit periods corresponding to the unit areas.

In accordance with another aspect of the present invention, a system is provided for allocating resources in a communication system. The system includes a Base Station (BS) for detecting an interference period by comparing a data transmission period in a first cell with a data transmission period in a second cell, dividing the interference period into a plurality of unit periods, dividing each of the first cell and the second cell into a plurality of unit areas corresponding to the unit periods, and allocating to the unit areas resources of the unit periods corresponding to the unit areas.

## BRIEF DESCRIPTION OF THE DRAWINGS

The above and other aspects, features and advantages of certain exemplary embodiments of the present invention will be more apparent from the following detailed description taken in conjunction with the accompanying drawings, in which:

FIG 1 is a schematic view of a typical multi-cellular communication system;
FIG 2 is a flowchart illustrating a resource allocation operation in a communication system according to the present invention;
FIG 3 is a flowchart illustrating an operation of a BS in a communication system according to the present invention;
FIG 4 illustrates a cell structure and a frame structure in a communication system according to the present invention;
FIG 5 illustrates another cell structure and a frame structure in a communication system according to the present invention; and
FIG 6 illustrates another cell structure and a frame structure in a communication system according to the present invention.

Throughout the drawings, the same drawing reference numerals will be understood to refer to the same elements, features and structures.

## DETAILED DESCRIPTION OF THE PREFERRED EMBODIMENTS

The matters in the description are provided to assist in understanding the preferred embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

The present invention provides a method and system for allocating resources in a multi-cellular communication system. While the preferred embodiments of the present invention are described herein in the context of a Time Division Duplexing (TDD) communication system where bi-directional communications are conducted in TDD, the present invention is also applicable to other communication systems, for example, a hybrid duplexing communication system using both TDD and Frequency Division Duplexing (FDD).

The present invention also provides a method and system for allocating resources efficiently in accordance with a communication environment to thereby improve system performance in the TDD communication system. The present invention also provides a method and system for allocating resources for data transmission and reception between a transmitter, for example, a Base Station (BS) covering a cell and a receiver for receiving a communication service from the transmitter, for example, a Mobile Station (MS) in a multi-cellular communication system. The BS allocates resources based on feedback information like Channel Quality Information (CQI), MS information, etc. received from the MS and transmits data using the allocated resources.

The present invention also provides a method and system for allocating resources to prevent Adjacent Cell Interference (ACI) in a multi-cellular communication system. A BS determines resources for data communication with an MS, that is, a DownLink (DL) area and an UpLink (UL) area of a frame. As described earlier, since the communication system operates in TDD, the resource allocation is equivalent to allocation of time slots.

The present invention also provides a method and system for allocating resources to prevent Co-Channel Interference (CCI) in a Cross Time Slot (CTS) period when the CTS period exists between frames determined by BSs covering their cells in a multi-cellular communication system. The present invention also provides a method and system for allocating resources to prevent CCI in a CTS period, which an MS may receive from a neighbor cell during data transmission/reception using resources allocated by its serving BS, that is, in DL and UL areas of a frame.

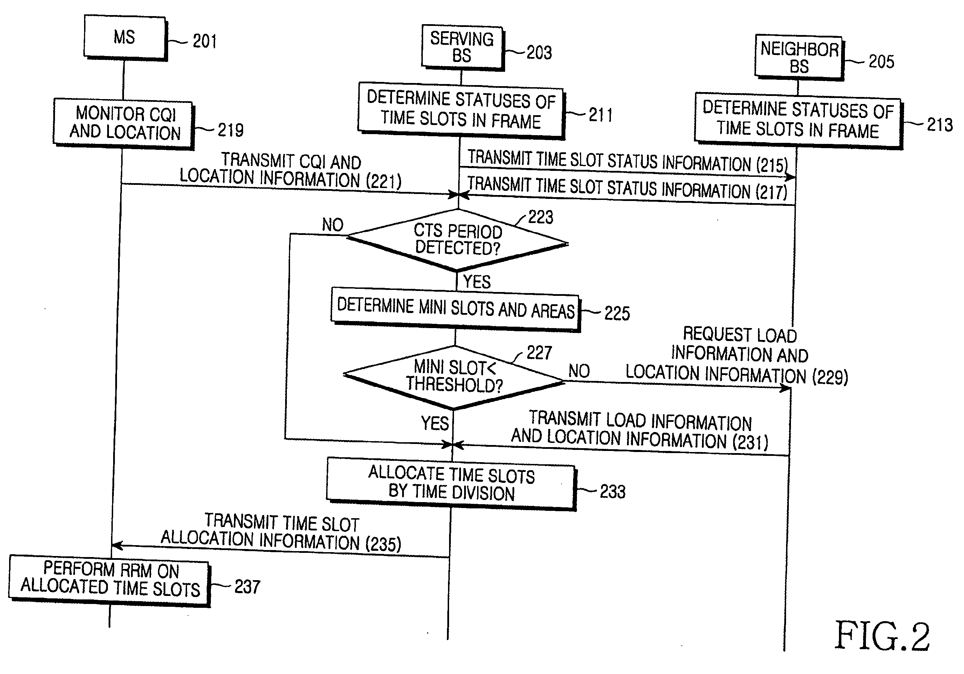

FIG. 2 shows a resource allocation operation in a communication system according to the present invention. Referring to FIG 2, each of a serving BS 203 and a neighbor BS 205 determines the status of each time slot in the DL and UL areas of a frame according to UL traffic and DL traffic for MSs within a cell that the BS covers in steps 211 and 213. The DL and UL areas of the frame have already been divided based on feedback information, such as CQI, MS information, etc., received from the MSs. The serving BS 203 transmits the time slot status information of the cell that the serving BS 203 covers (i.e. a serving cell) to the neighbor BS 205 in step 215 and the neighbor BS 205 transmits the time slot status information of the cell that the neighbor BS 205 covers (i.e. a neighbor cell) to the serving BS 203 in step 217. Hence, the serving BS 203 and the neighbor BS 205 share the time slot status information.

An MS 201 that receives a communication service from the serving BS 203 within the serving cell monitors a CQI and its location with respect to the serving BS 203 in step 219 and transmits the CQI and the MS location information to the serving BS 203 in step 221. In step 223, the serving BS 203 compares a frame of the serving cell (serving cell frame) with a frame of the neighbor cell (neighbor cell frame) and determines whether a CTS period exists between the frames. That is, the serving BS allocates time slots of the serving cell frame, which have been determined according to UL traffic and DL traffic, to the MS 201 according to the CQI and the MS location information received from the MS 201 in step 221 and determines the presence or absence of a CTS period by comparing the allocated time slots with the time slots of the neighbor cell frame that the neighbor BS 205 tells to the serving BS 203 in step 217.

In the presence of a CTS period, the serving BS 203 divides the CTS period of the serving cell frame into a number of mini slots, divides the serving cell into the number of areas, and maps the mini slots to the areas in step 225. The neighbor BS 205 also divides the CTS period of the neighbor cell frame into the number of mini slots, divides the serving cell into the number of areas, and maps the mini slots to the areas.

That is, the serving BS 203 and the neighbor BS 205 each divide the CTS period of the DL or UL area of the cell frame into a number of mini slots and divide its cell into as many areas as the mini slots. Alternatively, each of the serving BS 203 and the neighbor BS 205 divides its cell into a number of areas and then divided the CTS period of its cell frame into as many mini slots as the areas.

As described above, the mini slots are mapped to the cell areas. Cell areas corresponding to mini slots at the same time position in the serving cell and the neighbor cell are not adjacent to each other. The CTS period segmentation and the cell segmentation will be described later.

After the CTS period segmentation and the cell segmentation, the serving BS 203 compares the traffic concentration rate of MSs in an area, particularly in an area adjacent to the neighbor cell, which will be carried in a mini slot mapped to the area, with a traffic concentration rate threshold for a mini slot in step 227. That is, the serving BS 203 determines whether the mini slot corresponding to the area can sufficiently transmit the traffic for the MSs located in the area.

When a mini slot does not suffice for the traffic, that is, when traffic is so concentrated on the MSs in the area as to cause overhead to the mini slot, the serving BS 203 requests interference estimation information, that is, MS load information and MS location information of MSs within the neighbor cell to the neighbor BS in order to transmit and receive the concentrated traffic of the area in the mini slot mapped to the area and a mini slot mapped to another area in step 229. In response to the request, the neighbor BS 205 transmits the MS load information and the MS location information to the serving BS 203 in step 231.

In step 233, the serving BS 203 allocates time slots to the MS 201 in accordance with the cell segmentation, for data transmission between the MS 201 and the serving BS 203, calculates interference information according to the MS load information and the MS location information received from the neighbor BS 205, and performs time division according to the interference information such that the concentrated traffic of the area is transmitted and received in the mini slot corresponding to the another area, as well as the mini slot corresponding to the area in the CTS period of the serving cell frame. That is, the serving BS 203 allocates time slots of the serving cell frame to the MS 201 by additionally allocating the mini slot corresponding to the another area to the MS 201 located in the area by time division. The serving BS 203 transmits the time slot allocation information to the MS 201 in step 235. The MS 201 then performs Radio Resource Management (RRS) on the allocated time slots and exchanges data with the serving BS 203 in the time slots in step 237.

In accordance with the above the present invention, the serving BS receives time slot status information of the neighbor cell from the neighbor BS and determines a CTS period between a serving cell frame and a neighbor cell frame. The serving BS then divides the time slots of the CTS period of the serving cell frame into a number of mini slots and divides the serving cell into as many areas as the mini slots. In the same manner, the neighbor BS divides the CTS period of the neighbor cell frame into the same number of mini slots and divides the neighbor cell into the same number of areas. As described before, the mini slots are mapped to the areas in a one-to-one correspondence and areas mapped to mini slots at the same time position in the serving cell and the neighbor cell are not adjacent to each other. In this way, the BSs allocate time slots to MSs within the serving cell and the neighbor cell, thereby preventing CCI caused by the CTS period. Now a description will be made of a BS operation in the communication system according to the present invention.

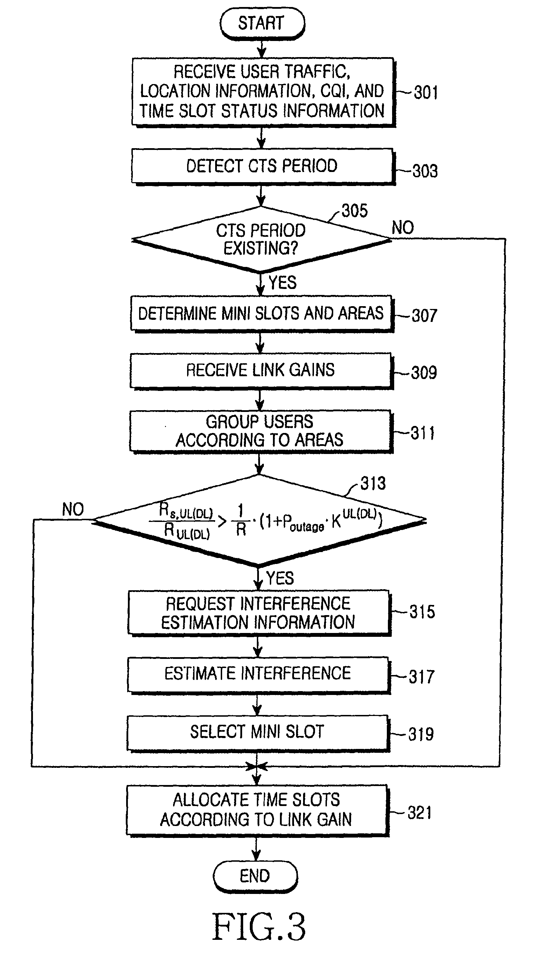

FIG 3 shows an operation of a BS in the communication system according to the present invention. Referring to FIG 3, the BS receives user traffic, MS location information, and CQIs from MSs within its cell coverage and receives time slot status information of a neighbor cell from a neighbor BS in step 301. After determining the statuses of time slots in DL and UL areas of a serving cell frame based on the received information, the BS determines whether a CTS period exists between the serving cell frame and a neighbor cell frame by comparing them using the received time slot status information in step 303.

If the CTS period is determined in step 305, the BS divides the CTS period into a number of mini slots, divides the serving cell as many areas as the mini slots, and maps the mini slots to the areas in step 307. In step 309, the BS receives link gains from the MSs. While the MSs calculate the link gains and transmit them to the BS, it can be further contemplated that the BS calculates the link gains instead of the MSs. The link gains are calculated by Equation (1),

$$G_i = f(H_i, PL_i) \underset{=}{\Delta} \frac{H_i^2}{PL_i}, \qquad i = 1, 2, \dots I^D$$

$$\dots \dots (1)$$

where $G_i$ denotes the link gain between the BS and an $i^{th}$ MS within the serving cell, $H_i$ denotes the channel gain between the BS and the $i^{th}$ MS, $PL_i$ denotes the path loss between the BS and the $i^{th}$ HMS, and $I^D$ denotes the number of the DL MSs.

The channel gain $H_i$ and the path loss $PL_i$ are computed by Equation (2) and Equation (3), respectively.

$$H_i = \sqrt{\frac{1}{N} \cdot \sum_{n=1}^{N} |H_{i,n}|^2}$$

$$\dots \dots (2)$$

where $N$ denotes the total number of subcarriers and $H_{i,n}$ denotes the frequency response of an $n^{th}$ subcarrier of the $i^{th}$ MS. Thus, the channel gain $H_i$ is the Root Mean Square (RMS) of all frequency responses for the $i^{th}$ MS, that is, the effective power of all frequency responses.

$$PL_i = PL(d_0) + 10\gamma \log_{10}\left(\frac{d_i}{d_0}\right) + X_\sigma$$

$$\ldots\ldots(3)$$

where $d_0$ denotes a reference distance set according to a communication environment, $d_i$ denotes the distance between the BS and the $i^{th}$ MS, $\gamma$ denotes a path loss exponent, and $X_\sigma$ denotes a random variable with lognormal distribution with respect to shadow fading with standard deviation $\sigma$.

The BS groups MSs according to the location information of the MSs in accordance with the divided areas in step 311. Since the areas are mapped to the mini slots, the same mini slot is allocated to MSs within the same area. Therefore, the same mini slot is allocated to the MSs of the same group. In step 313, the BS compares the traffic concentration rate of the MSs in an area, particularly in an area adjacent to the neighbor cell with a traffic concentration rate threshold. In other words, the BS determines whether a mini slot mapped to the area can carry traffic concentrated in the area. Then the BS determines whether the condition expressed as Equation (4) is satisfied.

$$\frac{R_{r,UL(DL)}}{R_{UL(DL)}} > \frac{1}{R} \cdot \left(1 + p_{outage} \cdot K^{UL(DL)}\right)$$

$$\ldots\ldots(4)$$

where $R_{UL(DL)}$ denotes a total UL(DL) traffic amount, $R_{r,LUL(DL)}$ denotes the amount of UL(DL) traffic in an $r^{th}$ area among the divided areas, $p_{outage}$ denotes an acceptable system outage probability per mini slot, $K^{UL(DL)}$ denotes the number of UL (DL) time slots in the CTS period, and $\dfrac{1}{R}$ denotes an ideal traffic load concentration rate for the area. That is, the BS determines whether traffic for the MSs located in the area can be delivered in the mini slot mapped to the area in step 313.

If the above condition is satisfied, which implies that the traffic of the MSs is too concentrated to be delivered in the mini slot, the BS requests MS load information and MS location information of MSs within the neighbor cell to the neighbor BS in order to estimate the mini slots of the CTS period of the neighbor cell frame and thus distribute the concentrated traffic to the mini slot mapped to the area and the mini slot mapped to another area in step 315. In step 317, the BS receives the MS load information and the MS location information from the neighbor BS and calculates interference information from the received information.

In step 319, the BS selects the mini slot mapped to an area other than the area. The selected area is an area where traffic is not so concentrated that the traffic can be delivered together with the concentrated traffic in the mini slot mapped to the selected area. The BS allocates time slots to the MSs through allocation of the mini slots of the CTS period based on the link gains in step 321.

On the other hand, in the absence of the CTS period in step 305 or if the condition of Equation (4) is not satisfied in step 313, the BS allocates the time slots of the DL and UL areas of the cell frame to the MSs in step 321. How the BS divides the cell into areas and the CTS period into mini slots in the communication system is described below.

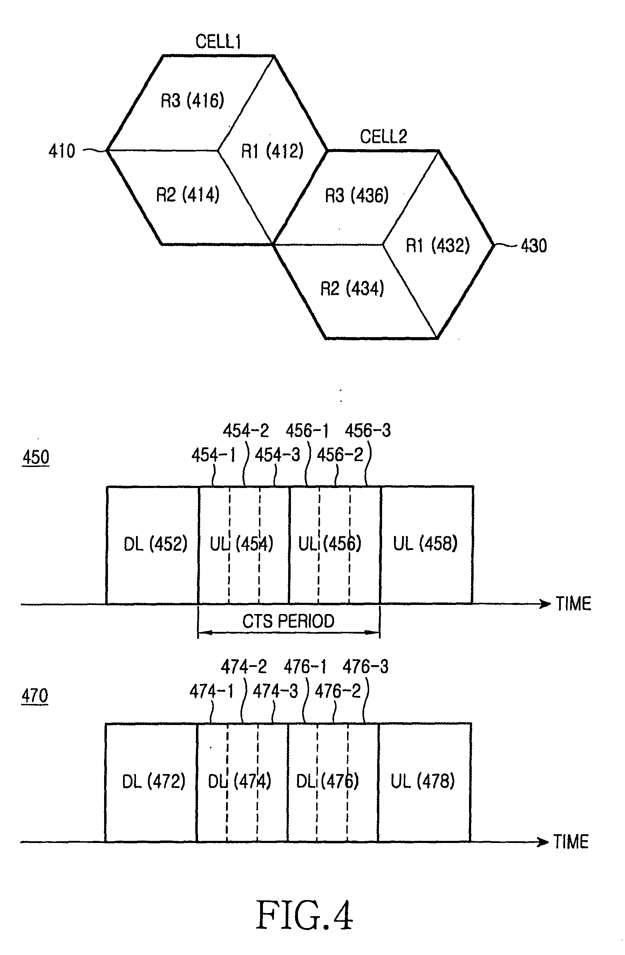

FIGs. 4, 5 and 6 show cell structures and frame structures in the communication system according to the present invention. In FIGs. 4, 5 and 6, a CTS period, which exists between a serving cell and a neighbor cell, is divided into a number of mini slots and the serving cell and the neighbor cell each are divided into as many areas as the mini slots. Hence, the cells and frames are configured in accordance with the mini slot segmentation.

Referring to FIG 4, the communication system is a multi-cellular communication system with a cell 1 410 and a cell 2 430. A CTS period exists between a frame 450 for cell 1 410 and a frame 470 for cell 2 430. The frame 450 is divided into a DL area 452 and UL areas 454, 456 and 458, and the frame 470 is divided into DL areas 472, 474 and 476, and a UL area 478. The CTS period of the frame 450 is divided into mini slots 454-1, 454-2, 454-3, 456-1, 456-2 and 456-3, and the CTS period of the frame 470 is divided into mini slots 474-1, 474-2, 474-3, 476-1, 476-2 and 476-3. Cell 1 410 is divided into areas 412, 414 and 416 in correspondence with the mini slots 454-1, 454-2, 454-3, 456-1, 456-2 and 456-3, and cell 2 430 is divided into areas 432, 434 and 436 in correspondence with the mini slots 474-1, 474-2, 474-3, 476-1, 476-2 and 476-3. The mini slots 454-1, 454-2, 454-3, 456-1, 456-2, 456-3, 474-1, 474-2, 474-3, 476-1, 476-2 and 476-3 are mapped to the areas 412, 414, 416, 432, 434 and 436.

To be more specific, first mini slots 454-1 and 456-1 of the frame 450 are mapped to a first area R1 412 of cell 1 410, second mini slots 454-2 and 456-2 are mapped to a second area R2 414 of cell 1 410, and third mini slots 454-3 and 456-3 are mapped to a third area R3 416 of cell 1 410. First mini slots 474-1 and 476-1 of the frame 470 are mapped to a first area R1 432 of cell 2 430, second mini slots 474-2 and 476-2 are mapped to a second area R2 434 of cell 2 430, and third mini slots 474-3 and 476-3 are mapped to a third area R3 436 of cell 2 430. Mapping between a mini slot and an area means that the mini slot is allocated to MSs within the area. For instance, the first mini slots 454-1 and 456-1 mapped to R1 412 are allocated to MSs in R1 412, and the third mini slots 474-3 and 476-3 mapped to R3 436 are allocated to MSs in R3 436.

Notably, the cell segmentation is performed such that mini slots at the same time position in the frames 450 and 470 are not adjacent to each other in cell 1 410 and cell 2 430. Hence, R1 412 mapped to the first mini slots 454-1 and 456-1 of the CTS period of the frame 450 is not adjacent to R1 432 mapped to the first mini slots 474-1 and 476-1 of the CTS period of the frame 470. R2 414 mapped to the second mini slots 454-2 and 456-2 of the CTS period of the frame 450 is not adjacent to R2 434 mapped to the second mini slots 474-2 and 476-2 of the CTS period of the frame 470. R3 416 mapped to the third mini slots 454-3 and 456-3 of the CTS period of the frame 450 is not adjacent to R3 436 mapped to the third mini slots 474-3 and 476-3 of the CTS period of the frame 470.

A BS 1 managing cell 1410 receives time slot status information of cell 2 430 from a BS 2 managing cell 2 430. The BS 1 determines a CTS period between the frames 450 and 470 according to the time slot status information, divides the CTS period of the frame 450 into the mini slots 454-1, 454-2, 454-3, 456-1, 456-2 and 456-3, and divides cell 1 410 into the areas 412, 414 and 416 in correspondence with the mini slots 454-1, 454-2, 454-3, 456-1, 456-2 and 456-3. The BS 2 also divides the CTS period of the frame 470 into the mini slots 474-1, 474-2, 474-3, 476-1, 476-2 and 476-3 and divides cell 2 430 into the areas 432, 434 and 436 in correspondence with the mini slots 474-1, 474-2, 474-3, 476-1, 476-2 and 476-3.

That is, the CTS periods at the same time position in the frames 450 and 470 are divided into the same number of mini slots 454-1, 454-2, 454-3, 456-1, 456-2 and 456-3, and 474-1, 474-2, 474-3, 476-1, 476-2 and 476-3. And cell 1 410 and cell 2 430 are divided into the same number of areas 412, 414 and 416, and 432, 434 and 436 in correspondence with the mini slots 454-1, 454-2, 454-3, 456-1, 456-2 and 456-3, and 474-1, 474-2, 474-3, 476-1, 476-2 and 476-3. As described before, the mini slots are mapped to the areas in a one-to-one correspondence and areas of cell 1 410 and cell 2 430 mapped to mini slots at the same time position are not adjacent to each other. Allocation of time slots to MSs in each cell through the cell segmentation, the CTS segmentation, and the area-to-mini slot mapping prevents CCI in the CTS period.

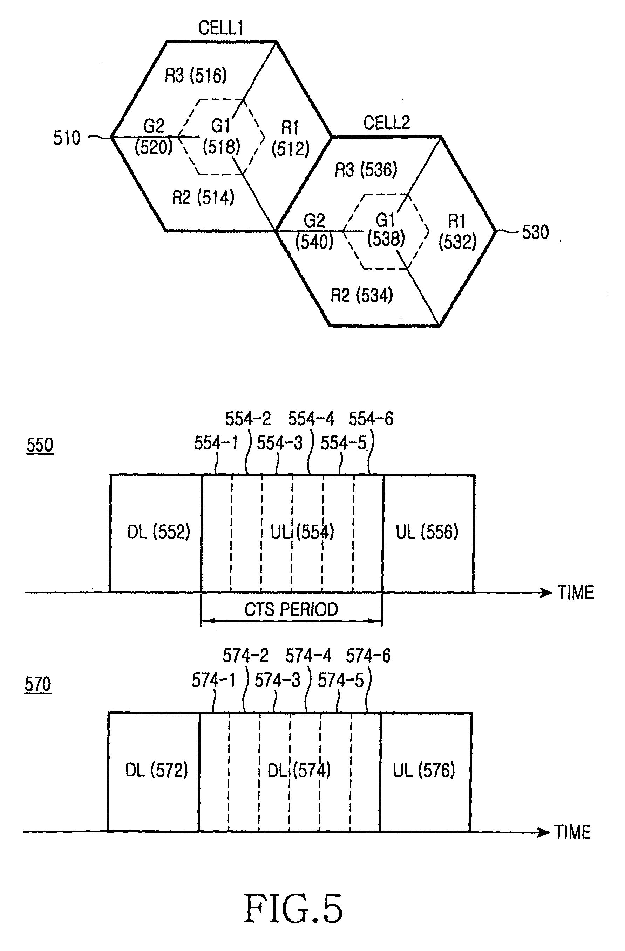

FIG 5 shows a cell structure and a frame structure in the communication system according to the present invention. In FIG 5, cells and frames are divided according to link gains. Referring to FIG 5, the communication system is a multi-cellular communication system with a cell 1 510 and a cell 2 530. A CTS period exists between a frame 550 for cell 1 510 and a frame 570 for cell 2 530. Cell 1 510 is divided into areas 512, 514, 516, 518, and 520 according to the CTS period and link gains, and cell 2 530 is divided into areas 532, 534, 536, 538 and 540 according to the CTS period and link gains. The link gains have been described before and thus a description of the link gains will not provided.

The frame 550 is divided into a DL area 552 and UL areas 554 and 556, and the frame 570 is divided into DL areas 572 and 574, and a UL area 576. The CTS period of the frame 550 is divided into mini slots 554-1 to 554-6 in correspondence with the areas 512, 514, 516, 518, and 520, and the CTS period of the frame 570 is divided into mini slots 574-1 to 574-6 in correspondence with the areas 532, 534, 536, 538 and 540. The mini slots 554-1 to 554-6 and 574-1 to 574-6 are mapped to the areas 512, 514, 516, 518, 520, 532, 534, 536, 538 and 540. Areas R1 512 and 532, areas R2 514 and 534, and areas R3 516 and 536 within areas G1 518 and 528 having high link gains in cell 1 510 and cell 2 530 are mapped to the mini slots 554-1, 554-2, 554-3, 574-4, 574-5, and 574-6 at switching points in the frames 550 and 570, that is, at the boundary between the DL area 552 and the UL area 554 of the frame 550 and at the boundary between the DL area 574 and the UL area 576 of the frame 570. The areas G1 518 and 538 and areas G2 520 and 540 are defined according to link gains. For better understanding of the present invention, it is assumed that G1 518 and 538 at the centers of cell 1 510 and cell 2 530 have higher gains than G2 520 and 540 at boundaries of cell 1 510 and cell 2 530.

More specifically, as to the frame 550, a first mini slot 554-1 is mapped to a first area R1 512 in G1 518, a second mini slot 554-2 is mapped to a second area R2 514 in G1 518, a third mini slot 554-3 is mapped to a third area R3 516 in G1 518, a fourth mini slot 554-4 is mapped to a fourth area R1 512 in G2 520, a fifth mini slot 554-5 is mapped to a fifth area R2 514 in G2 520, and a sixth mini slot 554-6 is mapped to a sixth area R3 516 in G2 520.

As to the frame 570, a first mini slot 574-1 is mapped to a first area R1 532 in G2 540, a second mini slot 574-2 is mapped to a second area R2 534 in G2 540, a third mini slot 574-3 is mapped to a third area R3 536 in G2 540, a fourth mini slot 574-4 is mapped to a fourth area R1 532 in G1 538, a fifth mini slot 574-5 is mapped to a fifth area R2 534 in G1 538, and a sixth mini slot 574-6 is mapped to a sixth area R3 536 in G1 538.

Mapping between a mini slot and an area means that the mini slot mapped to the area is allocated to MSs located in the area. For example, the first mini slot 554-1 mapped to R1 512 in G1 518 is allocated to an MS within R1 512 of G1 518 in cell 1 510, and the sixth mini slot 574-6 mapped to R3 516 in G1 538 is allocated to an MS within R3 516 of G1 538 in cell 2 530.

Areas mapped to mini slots at the same time position in cell 1 510 and cell 2 530 are not adjacent to each other, and mini slots at the same time position are not allocated to an MS located in G1 518 and 538 and an MS in G2 520 and 540 of cell 1 510 and cell 2 530. That is, the first area R1 512 of G1 518 and the fourth area R1 512 of G2 520 in cell 1 510, which are mapped to the first and fourth mini slots 554-1 and 554-4 of the frame 550, are not adjacent to the first area R1 532 of G2 540 and the fourth area R1 532 of G1 538 in cell 2 530, which are mapped to the first and fourth mini slots 574-1 and 574-4 of the frame 570. Thus, mini slots at the same position are not allocated to MSs in G1 518 and 538 with high link gains in cell 1 510 and cell 2 530 and MSs in G2 520 and 540 with low link gains in cell 1 510 and cell 2 530. That is, the first mini slot 554-1 is allocated to an MS located in R1 512 of G1 518 in cell 1 510 and the fourth mini slot 574-4 is allocated to an MS located in R1 512 of G1 538 in cell 2 530. The fourth mini slot 554-4 is allocated to an MS located in R1 512 of G2 520 in cell 1 510 and the first mini slot 574-1 is allocated to an MS located in R1 532 of G2 540 in cell 2 530.

The second area R2 514 of G1 518 and the fifth area R2 514 of G2 520 in cell 1510, which are mapped to the second and fifth mini slots 554-2 and 554-5 of the frame 550, are not adjacent to the second area R2 534 of G2 540 and the fifth area R2 534 of G1 538 in cell 2 530, which are mapped to the first and fifth mini slots 574-2 and 574-5 of the frame 570. Thus, mini slots at the same position are not allocated to MSs in G1 518 and 538 with high link gains in cell 1 510 and cell 2 530 and MSs in G2 520 and 540 with low link gains in cell I and cell 2 530. That is, the second mini slot 554-2 is allocated to an MS located in R2 514 of G1 518 in cell 1 510 and the fifth mini slot 574-5 is allocated to an MS located in R2 534 of G1 538 in cell 2 530. The fifth mini slot 554-5 is allocated to an MS located in R2 514 of G2 520 in cell 1 510 and the second mini slot 574-2 is allocated to an MS located in R2 534 of G2 540 in cell 2 530.

The third area R3 516 of G1 518 and the sixth area R3 516 of G2 520 in cell 1 510, which are mapped to the third and sixth mini slots 554-3 and 554-6 of the frame 550, are not adjacent to the third area R3 536 of G2 540 and the sixth area R3 536 of G1 538 in cell 2 530, which are mapped to the third and sixth mini slots 574-3 and 574-6 of the frame 570. Thus, mini slots at the same position are not allocated to MSs in G1 518 and 538 with high link gains in cell 1 510 and cell 2 530 and MSs in G2 520 and 540 with low link gains in cell 1 510 and cell 2 530. That is, the third mini slot 554-3 is allocated to an MS located in R3 516 of G1 518 in cell 1 510 and the sixth mini slot 574-6 is allocated to an MS located in R3 536 of G1 538 in cell 2 530. The sixth mini slot 554-6 is allocated to an MS located in R3 516 of G2 520 in cell 1 510 and the third mini slot 574-3 is allocated to an MS located in R3 536 of G2 540 in cell 2 530.

In the above the present invention, a BS 1 managing cell 1 510 receives time slot status information of cell 2 530 from a BS 2 managing cell 2 530. The BS 1 determines a CTS period between the frames 550 and 570 according to the time slot status information, divides the CTS period of the frame 550 into a number of mini slots 554-1 to 554-6 and divides cell 1 510 into as many areas 512, 514, 516, 158 and 520 as the mini slots 554-1 to 554-6. The BS 2 also divides the CTS period of the frame 570 into the number of mini slots 574-1 to 574-6 and divides cell 2 530 into as many areas 532, 534, 536, 538 and 540 as the mini slots 574-1 to 574-6.

That is, the CTS periods at the same time position in the frames 550 and 570 are divided into the same number of mini slots 554-1 to 554-6 and 574-1 to 574-6, and cell 1 510 and cell 2 530 are divided into as many areas 512, 514, 516, 158 and 520, and 532, 534, 536, 538 and 540 as the mini slots 554-1 to 554-6 and 574-1 to 574-6. As described before, the mini slots are mapped to the areas in a one-to-one correspondence and areas of cell 1 510 and cell 2 530 mapped to mini slots at the same time position are not adjacent to each other. Allocation of time slots to MSs in each cell through the cell segmentation, the CTS segmentation, and the area-to-mini slot mapping prevents CCI in the CTS period.

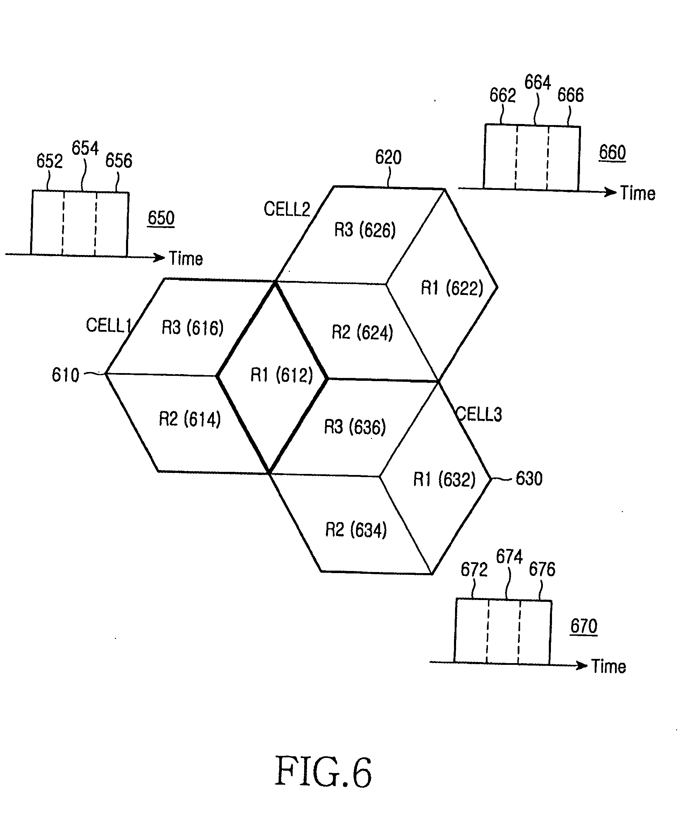

FIG 6 shows a cell structure and a frame structure in the communication system according to the present invention. Cells and frames are configured as in FIG 6 when the condition described by Equation (4) is satisfied. Referring to FIG. 6, the communication system is a multi-cellular communication system with a cell 1 610, a cell 2 620, and a cell 3 630. A CTS period exists among a frame 650 for cell 1 610, a frame 660 for cell 2 620, and a frame 670 for cell 3 630. While not shown in detail, each of the frames 650, 660 and 670 is divided into a DL area and a UL area. The CTS period of the frame 650 is divided into first, second and third mini slots 652, 654 and 656, the CTS period of the frame 660 is divided into first, second and third mini slots 662, 664 and 666, and the CTS period of the frame 670 is divided into first, second and third mini slots 672, 674 and 676. Cell 1 610 is divided into a first area R1 612, a second area R2 614, and a third area R3 616 in correspondence with the mini slots 652, 654 and 656. Cell 2 620 is divided into a first area R1 622, a second area R2 624, and a third area R3 626 in correspondence with the mini slots 662, 664 and 666. Cell 3 630 is divided into a first area R1 632, a second area R2 634, and a third area R3 636 in correspondence with the mini slots 672, 674 and 676. The mini slots 652, 654, 656, 662, 664, 666, 672, 674 and 676 are mapped to the areas 612, 614, 616, 622, 624, 626, 632, 634, and 636.

More specifically, as to the frame 650, the first mini slot 652 is mapped to R1 612, the second mini slot 654 is mapped to R2 614, and the third mini slot 616 is mapped to R3 616 in cell 1 610. As to the frame 660, the first mini slot 662 is mapped to R1 622, the second mini slot 664 is mapped to R2 624, and the third mini slot 666 is mapped to R3 626 in cell 2 620. As to the frame 670, the first mini slot 672 is mapped to R1 632, the second mini slot 674 is mapped to R2 634, and the third mini slot 676 is mapped to R3 636 in cell 3 630.

Mapping between a mini slot and an area means that the mini slot mapped to the area is allocated to MSs located in the area. For example, the first mini slot 652 mapped to R1 612 in cell 1 610 is allocated to an MS within R1 612 in cell 1 610, the third mini slot 666 mapped to R3 626 is allocated to an MS within R3 626 in cell 2 620, and the second mini slot 674 mapped to R2 634 is allocated to an MS within R2 634 in cell 3 630.

Areas mapped to mini slots at the same time position in cell 1 610, cell 2 620 and cell 3 630 are not adjacent to each other. That is, R1 612 of cell 1 610 mapped to the first mini slot 652 of the frame 650, R1 622 of cell 2 620 mapped to the first mini slot 662 of the frame 660, and R1 632 of cell 3 630 mapped to the first mini slot 672 of the frame 670 are not adjacent to one another. R2 614 of cell 1 610 mapped to the second mini slot 654 of the frame 650, R2 624 of cell 2 620 mapped to the second mini slot 664 of the frame 660, and R2 634 of cell 3 630 mapped to the second mini slot 674 of the frame 670 are not adjacent to one another. R3 616 of cell 1 610 mapped to the third mini slot 656 of the frame 650, R3 626 of cell 3 630 mapped to the third mini slot 666 of the frame 660, and R3 636 of cell 3 630 mapped to the third mini slot 676 of the frame 670 are not adjacent to one another.

If the condition of Equation (4) is satisfied, for example, when traffic is too concentrated on MSs in R1 612 of cell 1 610 to be transmitted in the first mini slot 652 mapped to R1 612, a BS 1 managing cell 1 610 requests interference estimation information to BS 2 and BS 3 managing cell 2 620 and cell 3 630. To be more specific, when traffic is too concentrated in R1 612 to be transmitted in the first mini slot 652 mapped to R1 612, the first BS requests interference estimation information regarding R2 624 of cell 2 620 and R3 636 of cell 3 630 to the BS 2 and BS 3, respectively in order to distribute the concentrated traffic to the second mini slot 654 mapped to R2 614 and the third mini slot 656 mapped to R3 616 of cell 1 610. Since the interference estimation information has been described before, its description is not provided. Upon receipt of the interference estimation information, the first BS estimates interference from the interference estimation information and transmits the concentrated traffic additionally in a mini slot mapped to a less-interfering area.

In the above the present invention, the BS 1 receives time slot status information from the BS 2 and BS 3 and determines a CTS period among the frames 650, 660 and 670 according to the time slot status information. Then the first BS divides the CTS period of the frame 650 into a number of mini slots 652, 654 and 656 and divides cell 1 610 into as many areas 612, 614 and 616 as the mini slots 652, 654 and 656. In accordance with the CTS segmentation of the BS 1, the BS 2 also divides the CTS period of the frame 660 into the number of mini slots 662, 664 and 666 and divides cell 2 660 into as many areas 622, 624 and 626 as the mini slots 662, 664 and 666. The BS 3 also divides the CTS period of the frame 670 into the number of mini slots 672, 674 and 676 and divides cell 3 630 into as many areas 632, 634 and 636 as the mini slots 672, 674 and 676.

If traffic is concentrated on MSs in an area, particularly in R1 612 of cell 1 610, the BS 1 requests interference estimation information to the BS 2 and BS 3 and estimates interference from cell 2 620 and cell 3 630 according to the interference estimation information received from the BS 2 and BS 3. In other words, the BS 1 estimates interference from R2 624 of cell 2 620 and R3 636 of cell 3 630 adjacent to R1 612 of cell 1 610 and transmits the concentrated traffic additionally in a mini slot mapped to a less-interfering area. Allocation of time slots to MSs in each cell through the cell segmentation, the CTS segmentation, and the area-to-mini slot mapping prevents CCI in the CTS period.

As is apparent from the above description, the present invention prevents CCI in a CTS period existing among frames from cells by dividing the CTS period of each of the frames into a number of mini slots and then dividing each of the cells into the number of areas.

While the invention has been shown and described with reference to certain preferred embodiments of the present invention thereof, it will be understood by those skilled in the art that various changes in form and details may be made therein without departing from the spirit and scope of the present invention as defined by the appended claims and their equivalents.

## Claims

1. A method for allocating resources in a communication system, comprising:

   detecting an interference period by comparing a data transmission period in a first cell with a data transmission period in a second cell;
   dividing the interference period into a plurality of unit periods;
   dividing each of the first cell and the second cell into a plurality of unit areas corresponding to the unit periods; and
   allocating to the unit areas resources of the unit periods corresponding to the unit areas.

**2.** The method of claim 1, wherein the dividing each of the first cell and the second cell comprises dividing the first cell and the second cell so a unit area of the first cell and a unit area of the second cell corresponding to unit periods at a same time position are not adjacent to each other.

**3.** The method of claim 1, wherein the dividing each of the first cell and the second cell comprises:

calculating link gains in the first cell and the second cell;
dividing each of the first cell and the second cell into the plurality of unit areas according to the link gains; and
dividing the interference period into a plurality of unit periods according to the unit areas.

**4.** The method of claim 3, wherein the dividing the interference period according to the unit areas comprises dividing the interference period so a unit area with a high link gain among the unit areas corresponds a unit area adjacent to a switching point in the data transmission period.

**5.** The method of claim 4, wherein the switching point is a boundary between a downlink data transmission period and an uplink data transmission period in the interference period.

**6.** The method of claim 3, wherein the dividing the interference period according to the unit areas comprises dividing the interference period so unit periods corresponding to the unit areas of each of the first cell and the second cell are at different time positions.

**7.** The method of claim 3, wherein the calculating link gains comprises:

calculating a channel gain and a path loss for a Mobile Station (MS) in each of the first cell and the second cell; and
calculating a link gain for the MS according to channel gain and path loss.

**8.** The method of claim 1, wherein the allocating resources comprises allocating to a unit area resources of a unit period corresponding to the unit area when resources are to be allocated to the unit area.

**9.** The method of claim 1, wherein the allocating resources comprises allocating resources of a unit period corresponding to a unit area and resources of a unit period corresponding to another unit area adjacent to the unit area to the unit area according to interference information regarding the second cell when resources are insufficient for a unit area.

**10.** The method of claim 9, wherein the interference information is information calculated from location information and load information of a Mobile Station (MS) in the second cell.

**11.** The method of claim 1, wherein the interference period is a Cross Time Slot (CTS) period between a downlink data transmission period and an uplink data transmission period in the data transmission periods of the first and second cells.

**12.** A system for allocating resources in a communication system, comprising:

a Base Station (BS) for detecting an interference period by comparing a data transmission period in a first cell with a data transmission period in a second cell, dividing the interference period into a plurality of unit periods, dividing each of the first cell and the second cell into a plurality of unit areas corresponding to the unit periods, and allocating to the unit areas resources of the unit periods corresponding to the mit areas.

**13.** The system of claim 12, wherein the BS divides each of the first cell and the second cell into the plurality of unit areas so a unit area of the first cell and a unit area of the second cell corresponding to unit periods at a same time position are not adjacent to each other.

**14.** The system of claim 12, wherein the BS calculates link gains in the first cell and the second cell, divides each of the first cell and the second cell into the plurality of unit areas according to the link gains, and divides the interference period into a plurality of unit periods according to the unit areas.

**15.** The system of claim 14, wherein the BS divides the interference period into the plurality of unit periods so a unit area with a high link gain among the unit areas corresponds a unit area adjacent to a switching point in the data transmission period.

16. The system of claim 15, wherein the switching point is the boundary between a downlink data transmission period and an uplink data transmission period in the interference period.

17. The system of claim 14, wherein the BS divides the interference period so that unit periods corresponding to the unit areas of each of the first cell and the second cell are at different time positions.

18. The system of claim 14, wherein the BS calculates a channel gain and a path loss for a Mobile Station (MS) in each of the first cell and the second cell, and calculates a link gain for the MS according to the channel gain and the path loss.

19. The system of claim 12, wherein the BS allocates to a unit area resources of a unit period corresponding to the unit area when resources are to be allocated to the unit area.

20. The system of claim 12, wherein the BS allocates resources of a unit period corresponding to a unit area and resources of a unit period corresponding to another unit area adjacent to the unit area to the unit area according to interference information regarding the second cell when resources are insufficient for the unit area.

21. The system of claim 20, wherein the interference information is information calculated from location information and load information of a Mobile Station (MS) in the second cell.

22. The system of claim 12, wherein the interference period is a Cross Time Slot (CTS) period between a downlink data transmission period and an uplink data transmission period in the data transmission periods of the first and second cells.

TDD DL (151)    TDD UL (153)

—150

TDD DL (161)    TDD UL (163)

—160

CTS PERIOD

# FIG.1

FIG.2

EP 1 841 266 A2

$$\frac{R_{s,UL(DL)}}{R_{UL(DL)}} > \frac{1}{R} \cdot (1 + P_{outage} \cdot K^{UL(DL)})$$

FIG.3

CELL1

R3 (416)

R1 (412)

CELL2

410

R2 (414)

R3 (436)

R1 (432)

430

R2 (434)

450

454-2    456-1    456-3
454-1  ) 454-3 ) 456-2 )

| DL (452) | UL (454) | UL (456) | UL (458) |

TIME

CTS PERIOD

470

474-2    476-1    476-3
474-1  ) 474-3 ) 476-2 )

| DL (472) | DL (474) | DL (476) | UL (478) |

TIME

# FIG.4

FIG.5

FIG.6